(19) Europäisches Patentamt
European Patent Office
Office européen des brevets

(11) EP 1 242 533 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(21) Anmeldenummer: **00977568.5**

(22) Anmeldetag: **24.11.2000**

(51) Int Cl.[7]: **C08L 23/06**

(86) Internationale Anmeldenummer:
**PCT/EP2000/011727**

(87) Internationale Veröffentlichungsnummer:
**WO 2001/040371 (07.06.2001 Gazette 2001/23)**

(54) **VERWENDUNG VON SUBSTITUIERTEN POLYETHYLENIMINEN ZUR DAUERHAFTEN VERBESSERUNG DER KLEBSTOFF- UND/ODER BESCHICHTUNGS-KOMPATIBILITÄT VON POLYOLEFIN-BASIERTEN FORMKÖRPERN, FASERN UND FOLIEN**

USE OF SUBSTITUTED POLYETHYLENIMINES FOR THE SUSTAINED IMPROVEMENT OF THE ADHESIVE AND/OR COATING COMPATIBILITY OF POLYOLEFIN-BASED SHAPED BODIES, FIBRES AND FILMS

UTILISATION DE POLYETHYLENE-IMINES SUBSTITUEES POUR AMELIORER DURABLEMENT LA COMPATIBILITE DE L'ADHESIF ET/OU DU REVETEMENT DE CORPS MOULES, DE FIBRES ET DE FILMS A BASE DE POLYOLEFINE

(84) Benannte Vertragsstaaten:
**AT BE CH CY DE DK ES FI FR GB GR IE IT LI LU MC NL PT SE TR**

(30) Priorität: **03.12.1999 DE 19958397**

(43) Veröffentlichungstag der Anmeldung:
**25.09.2002 Patentblatt 2002/39**

(73) Patentinhaber: **Cognis Deutschland GmbH & Co. KG**
**40589 Düsseldorf (DE)**

(72) Erfinder:
- **BIRNBRICH, Paul**
  **42719 Solingen (DE)**
- **KLAMANN, Jörg-Dieter**
  **27574 Bremerhaven (DE)**
- **WUCHERPFENNIG, Sven**
  **40595 Düsseldorf (DE)**
- **HAACK, Michael**
  **21709 Himmelpforten (DE)**

(56) Entgegenhaltungen:
**WO-A-94/11442** **GB-A- 894 178**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Gebiet der Erfindung

Die Erfindung betrifft die Verwendung von substituierten Polyethyleniminen zur dauerhaften Verbesserung der Klebstoff- und/oder Beschichtungs-Kompatibilität von Polyolefin-basierten Formkörpern, Fasern und Folien.

### Stand der Technik

Formgestaltete Werkstücke beliebiger Raumform, einschließlich Formkörpern, Fasern und Folien auf Polyolefinbasis finden heute in breitestem Umfange praktische Verwendung. Ein wichtiger Problembereich liegt hier in der Verbesserung der Oberflächeneigenschaften dieser aufgrund ihrer Struktur unpolaren Kohlenwasserstoffverbindungen. So ist die mangelnde Haftfestigkeit gegenüber Beschichtungen und Verklebungen ein zentrales Problem, zu dessen Lösung seit Jahrzehnten zahlreiche Vorschläge gemacht worden sind.

Es ist bekannt, daß die Kompatibilität der Kunststoff-Oberfläche gegenüber Beschichtungen und Verklebungen durch beispielsweise oxidative Nachbehandlungsverfahren wie Corona- oder Plasmabehandlung verbessert werden kann. Hierbei wird der Kunststoff in Gegenwart von Gasen und Entladungen an der Oberfläche oxidiert oder chemisch modifiziert, wodurch sich gewisse Oberflächen-Eigenschaften des Kunststoffs modifizieren lassen. Diese Methoden erfordern jedoch neben einem hohen Energieeinsatz stets einen zusätzlichen Arbeitsgang und führen zu Ozonemissionen bei der Fertigung von Kunststoffteilen. Daneben sind chemische Vorbehandlungsverfahren wie z.B. das Behandeln mit Fluor- oder Chlorgas, mit Chromschwefelsäure oder Fluorsulfonsäure, usw. seit längerem bekannt.

**WO 97/12694** und **WO 98/42776** beschreiben die Verwendung von Amphiphilen zur dauerhaften Verbesserung der Klebstoff- und/oder Beschichtungs-Kompatibilität von Polyolefin-basierten Formkörpern, Fasern und Folien. Dabei unterwirft man eine Mischung enthaltend (a) überwiegend ein oder mehrere Polyolefine, (b) ein oder mehrere migrationsfähiger Amphiphile und (c) ein oder mehrere Übergangsmetall-Verbindungen, bei Temperaturen im Bereich von 180 bis 320 °C auf übliche Weise einer formgebenden Verarbeitung, beispielsweise der Extrusion. Es ist offenbart, daß als Komponente b) insbesondere Dialkanolamide ungesättigter Fettsäuren, etwa Ölsäurediethanolamid oder Linolsäurediethanolamid, eingesetzt werden können.

Die deutsche Auslegeschrift **DE-B-12 51 903** beschreibt ein Verfahren zur Verbesserung der Anfärbbarkeit von Fäden, Filmen oder Bändern aus Polyolefinen durch Vermischen der Polyolefine mit einem oder mehreren anderen Polymeren, unter anderem Polyalkyleniminen und substituierten Polyalkyleniminen.

**US-A-4 582 877** beschreibt polymere Zusammensetzungen mit einem Gehalt an Umsetzungsprodukten von Poly-2-oxazolinen (die auch als sogenannte lineare Polyethylenimine bezeichnet werden) mit Carbonsäuren bzw. deren Anhydriden oder Salzen (Transamidierungsreaktion). Derartige Zusammensetzungen sollen sich durch eine verbesserte Affinität gegenüber polaren Materialien auszeichnen. Beispielsweise eignen sich Umsetzungsprodukte von Poly-2-ethyloxazolin mit Zinkstearat als Netzmittel für Polymere.

WO 91/04853 beschreibt ein Verfahren zur Erhöhung der Oberflächenenergie von organischen Polymeren geringer bis mittlerer Dichte. Hierzu wird das organische Polymer mit etwa 0,5 bis 10 Gew.-% - bezogen auf das Polymer - mit einem speziellen Amphiphil linearer Struktur vermischt.

### Beschreibung der Erfindung

Aufgabe der vorliegenden Erfindung war es, Arbeitsmittel bereitzustellen, mit denen die Klebstoff- und/oder Beschichtungs-Kompatibilität von Polyolefin-basierten Formkörpern, Fasern und Folien nachhaltig und dauerhaft verbessert werden kann. Mit anderen Worten war es Ziel der vorliegenden Erfindung, Arbeitsmittel bereitzustellen, um eine permanente Verbesserung der Haftfestigkeit von Polyolefinoberflächen gegenüber Verklebungen und/oder Beschichtungen sicherzustellen. Die Erfindung will dabei insbesondere die Einstellung hochfester Verklebungen ermöglichen, die das Auftreten von unerwünschten Adhäsionsbrüchen ausschließen und eine Zerstörung der Klebstoffuge nur über einen Cohäsionsbruch bzw. über einen kombinierten Cohäsions/-Adhäsionsbruch sicherstellen.

Gegenstand der vorliegenden Erfindung ist die Verwendung von substituierten Polyethyleniminen zur dauerhaften Verbesserung der Klebstoff- und/oder Beschichtungs-Kompatibilität von Polyolefin-basierten Formkörpern, Fasern und Folien, wobei man eine Mischung enthaltend

a) überwiegend ein oder mehrere Polyolefine und

b) 0,01 bis 20 Gew.-% - bezogen auf die Polyolefine - ein oder mehrere substituierte Polyethylenimine, die dadurch erhältlich sind, daß man Polyethylenimine, bei denen es sich um verzweigte, sphärische polymere Amine, mit Verbindungen der allgemeinen Formel (I)

$$R^1CO_2R^2 \quad (I)$$

worin der Rest $R^1$ einen gesättigten oder ungesättigten, geradkettigen oder verzweigten Alkylrest mit 5 bis 23 C-Atomen und der Rest $R^2$ Wasserstoff oder einen gesättigten oder ungesättigten, geradkettigen oder verzweigten Alkylrest mit 1 bis 24 C-Atomen bedeuten, umsetzt, wobei man die Umsetzung so durchführt, daß die Verbindungen (I) mit den eingesetzten Polyethyleniminen in einer molaren Menge $n_{(I)}$ abreagieren, die durch die Gleichung

$$n_{(I)} = f \times (m_{PEI} / 43)$$

gegeben ist, worin der Faktor f eine Zahl im Bereich von 0,25 bis 0,75 und $m_{PEI}$ die Masse des eingesetzten Polyethylenimins in Gramm bedeuten und die Operatoren "x" und "/" für Multiplikation und Division stehen, bei erhöhten Temperaturen auf übliche Weise einer formgebenden Verarbeitung wie Extrusions-, Kalandrier-, Spritzguß-, oder Blasformverfahren unterwirft.

Die im Rahmen der vorliegenden Erfindung einzusetzenden **Polyethylenimine,** in der Fachwelt oftmals mit PEI abgekürzt, sind verzweigte, sphärische polymere Amine. Auf zwei C-Atome folgt immer ein Stickstoff-Atom. Das Verhältnis von primären zu sekundären zu tertiären Stickstoff-Atomen beträgt vorzugsweise - wie bei den entsprechenden handelsüblichen Produkten üblich - etwa 1 : 2 : 1. Als Polymere haben PEIs eine Molekulargewichtsverteilung. Im Rahmen der vorliegenden Erfindung werden dabei vorzugsweise diejenigen Typen eingesetzt, deren mittlere Molmassen ($M_w$; gemessen durch Lichtstreuung) im Bereich von 800 bis 2.000.000 liegen; ganz besonders bevorzugt ist dabei der Bereich von 1.000 bis 50.000. Schema 1 verdeutlicht den Aufbau handelsüblicher verzweigter PEIs, bei denen das Verhältnis von primären zu sekundären zu tertiären Stickstoff-Atomen etwa 1 : 2 : 1 beträgt.

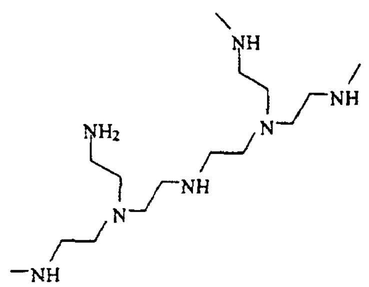

Schema 1

Wie bereits gesagt bedeuten in der Formel (I) der Rest R' einen gesättigten oder ungesättigten, geradkettigen oder verzweigten Alkylrest mit 5 bis 23 C-Atomen und der Rest $R^2$ Wasserstoff oder einen gesättigten oder ungesättigten, geradkettigen oder verzweigten Alkylrest mit 1 bis 24 C-Atomen. Dabei ist mit der Bezeichnung "geradkettig oder verzweigt" ausgedrückt, daß die Reste $R^1$ und $R^2$ keine cyclischen Strukturelemente enthalten dürfen. So fallen beispielsweise Harzsäuren wie Tallölfettsäure oder deren Ester nicht unter die Definition der erfindungsgemäß einzusetzenden Verbindungen (I).

Die Verbindungen der Formel (I) können allein oder in Mischungen untereinander eingesetzt werden. Vorzugsweise setzt man solche Verbindungen (I) ein, bei denen der Rest $R^1$ einen gesättigten oder ungesättigten, geradkettigen oder verzweigten Alkylrest mit 9 bis 17 C-Atomen und insbesondere mit 11 C-Atomen bedeutet. In einer weiteren bevorzugten Ausführungsform setzt man solche Verbindungen (I) ein, bei denen der Rest $R^2$ Wasserstoff oder eine Methylgruppe bedeutet.

Wie bereits gesagt führt man die Herstellung der erfindungsgemäßen substituierten Polyethylenimine so durch, daß die Verbindungen (I) mit den eingesetzten Polyethyleniminen in einer molaren Menge $n_{(I)}$ abreagieren, die durch die Gleichung

$$n_{(I)} = f \times (m_{PEI} / 43)$$

gegeben ist, worin der Faktor f eine Zahl im Bereich von 0,25 bis 0,75 und $m_{PEI}$ die Masse des eingesetzten Polyethylenimins in Gramm bedeuten und die Operatoren "x" und "/" für Multiplikation und Division stehen. Das Ausmaß der Umsetzung der Verbindungen (I) mit den eingesetzten Polyethyleniminen läßt sich auf unterschiedliche Weise detektieren. Beispiele für dem Fachmann einschlägig bekannte analytische Methoden sind etwa die Bestimmung der Aminzahl oder Infrarotspektroskopie; sofern es sich bei den Verbindungen (I) um Ester von Carbonsäuren mit kurzkettigen Alkoholen handelt, stellt auch die Bestimmung des bei der Umsetzung freigesetzten Alkohols eine geeignete Methode dar.

Zur Steuerung der Reaktion zwischen Polyethyleniminen und den Verbindungen (I) kann sich der Fachmann aller einschlägig bekannten Methoden bedienen. Insbesondere kann er Parameter wie Temperatur, Druck und Reaktionszeit entsprechend wählen. Gewünschtenfalls kann er die Reaktion auch in Gegenwart eines Katalysators durchführen.

In einer bevorzugten Ausführungsform setzt man die Verbindungen (I) bei deren Umsetzung mit den gewünschten Polyethyleniminen in einer molaren Menge ein, die durch die Gleichung

$$n_{(I)} = f^* \times (m_{PEI} / 43)$$

gegeben ist, worin der Faktor f* eine Zahl im Bereich von 0,40 bis 0,75 und $m_{PEI}$ die Masse des eingesetzten Polyethylenimins in Gramm bedeuten und die Operatoren "x" und "/" für Multiplikation und Division stehen; ganz besonders bevorzugt ist für f* dabei ein Wert im Bereich von 0,50 bis 0,65. Dies soll an Hand eines Beispiels erläutert werden: Setzt man 860 g eines verzweigten Polyethylenimins (PEI) ein und wählt für den Faktor f* den Wert 0,50, so ergibt sich durch Einsetzen dieser Werte in die genannte Gleichung $n_{(I)}$ zu

$$n_{(I)} = f^* \times (m_{PEI} / 43) = 0{,}50 \times (860 / 43) = 10{,}0$$

Man muß also - da $n_{(I)}$ definitionsgemäß die <u>molare</u> Menge der Verbindung (I) angibt - das PEI mit 10,0 mol der gewünschten Verbindung (I) umsetzen. Würde man die genannten 860 g PEI mit einer Verbindung (I) umsetzen und dabei für den Faktor f* den Wert 0,65 wählen, so erhielte man durch analoge Rechnung [$n_{(I)} = 0{,}65 \times (860 / 43) = 13{,}0$] das Ergebnis, daß das PEI mit 13,0 mol der gewünschten Verbindung (I) umzusetzen wäre.

Es sei in diesem Zusammenhang angemerkt, daß die Molmasse des jeweiligen PEI für die Berechnung von $n_{(I)}$ keine Rolle spielt. Der Grund hierfür ist darin zu sehen, daß der Quotient ($m_{PEI}$ / 43) letztlich nichts anderes darstellt als die Berechnung der in einer bestimmten Menge eines PEI vorhandenen molaren Menge an darin als Baustein enthaltenen Aziridin-Einheiten (43 ist die Molmasse von Aziridin).

In einer Ausführungsform setzt man als Komponente a) Polyethylen ein.

In einer Ausführungsform setzt man bei der formgebenden Verarbeitung der Polyolefine übliche weitere Hilfsstoffe zu.

Die erfindungsgemäß einzusetzenden Verbindungen b) sind zur Migration befähigt. Darunter ist zu verstehen, daß diese Verbindungen in der Lage sind, im Zuge der Herstellung durch beispielsweise Extrusionsverfahren an die Oberfläche des resultierenden Polyolefin-Formkörpers zu gelangen. Sie reichem sich dadurch an der Oberfläche bzw. den Oberflächen-nahen Bereichen der Kunststoff-Matrix an, was durch sukzessives Abtragen von Oberflächenschichten in der Größenordnung von jeweils wenigen Nanometern und anschließende Abscan-Techniken von der Anmelderin verifiziert wurde.

Durch den erfindungsgemäßen Einsatz der genannten substituierten Polyethylenimine b) ist gewährleistet, daß Beschichtungen bzw. Verklebungen permanent und ohne zusätzliche Vorbehandlung am Kunststoff haften können. Dabei bleiben einmal eingestellte Klebstoff- und/oder Beschichtungs-Kompatibilitäts-Werte über lange Zeiträume erhalten oder steigen manchmal sogar noch bei weiterführender Lagerung an. Im Hinblick auf die Klebstoffe und Beschichtungsmassen, die mit den erfindungsgemäß Oberflächen-modifizierten Polyolefinen in Kontakt gebracht werden können, so daß dabei eine dauerhafte Verklebung bzw. Beschichtung realisiert ist, gibt es erfindungsgemäß an sich keinerlei Beschränkungen. So können im Hinblick auf die Klebstoffe alle dem Fachmann vertrauten Klebstoffe, insbesondere der handelsüblichen Klebstoffe eingesetzt werden. Im Hinblick auf Beschichtungen sei insbesondere auf die Lacke aufmerksam gemacht. Lacke sind flüssige oder pulverförmig-feste Substanzen, die in dünner Schicht auf Gegenstände appliziert werden und die durch chemische Reaktion und/oder physikalische Vorgänge einen auf den Oberflächen der Objekte haftenden festen Film bilden, der dekorative und/oder schützende Funktionen hat. Zu den Beschichtungen zählt auch das Aufbringen von Druckfarben, da Druckfarben in einer Bindemittelschicht auf zu bedruckende Substrate aufgebracht werden, wobei die Haftung am Formkörper durch das Bindemittel, das eine Beschichtung ausbildet, vermittelt wird.

Der Einsatz der Mischung enthaltend die Komponenten a) und b) erfolgt durch übliche und dem Fachmann wohlvertraute formgebende Verarbeitungstechniken wie Extrusions-, Kalandrier-, Spritzgußverfahren und dergleichen.

Die Kombination der erfindungsgemäßen Lehre, die zur Ausbildung erhöhter Beschichtungs- bzw. Verklebungs-Kompatibilitäts-Werte führt, mit an sich bekannten Technologien zur Verbesserung der Beschichtungs- bzw. Verklebungs-Kompatibilität auf Polyolefinoberflächen fällt in den Rahmen der erfindungsgemäßen Lehre. So können die Oberflächen der gemäß der vorliegenden Erfindung hergestellten Polyolefine zusätzlich sowohl mechanisch wie chemisch und/oder physikalisch behandelt werden. Erforderlich ist das allerdings in aller Regel nicht.

Gewünschtenfalls können die Verbindungen b) bei der formgebenden Verarbeitung der Polyolefine a) in Kombination mit Übergangsmetall-Verbindungen c) eingesetzt werden. Dabei beträgt die Menge der Übergangsmetall-Verbindung - Metallgehalt der Übergangsmetall-Verbindung bezogen auf die Polyolefine - 0,01 bis 1000 ppm. Im Hinblick auf die Art der Übergangsmetall-Verbindungen besteht dabei an sich keine besondere Einschränkung. Demnach können im Rahmen der Lehre der vorliegenden Erfindung prinzipiell alle dem Fachmann bekannten Übergangsmetallverbindungen eingesetzt werden. In einer Ausführungsform setzt man als Übergangsmetall-Verbindungen Übergangsmetallsalze ein, vorzugsweise Salze auf Basis von organischen Säuren mit 6 bis 22 C-Atomen. In einer weiteren Ausführungsform setzt man die Übergangsmetall-Verbindungen in einer - Menge ein, die unterhalb von 5 ppm - Metallgehalt der Übergangsmetall-Verbindung bezogen auf die Polyolefine - liegt. In einer weiteren Ausführungsform setzt man solche Übergangsmetallverbindungen c) ein, deren Metalle aus der Gruppe Co, Zr, Fe, Pb, Mn, Ni, Cr, V, Ce, Ti und Sn gewählt sind. In einer Ausführungsform bringt man im Zuge der formgebenden Verarbeitung die Schmelze der Mischung enthaltend die Komponenten a), b) und c) mit Sauerstoff - insbesondere Luftsauerstoff - in Kontakt. Dies ist beispielweise beim Extrudieren dann der Fall, wenn die Schmelze den Extruder durch die Austrittsdüse verläßt. Die genannte bevorzugte Ausführungsform ermöglicht, daß - gegebenenfalls katalytisch unterstützte - oxidative Prozesse sowie weitere Sekundärreaktionen stattfinden können. Dabei kann (Luft)Sauerstoff einerseits an der Oberfläche selbst wirken, andererseits auch im Inneren des Kunststoffs - insbesondere in Oberflächen-nahen Bereichen -, wohin er durch Diffusion gelangen kann. Gewünschtenfalls setzt man neben den genannten Übergangsmetall-Verbindungen noch weitere Verbindungen ein, die dem Fachmann als Katalysatoren für oxidative Prozesse bekannt sind.

Die erfindungsgemäße Verwendung der substituierten Polyethylenimine b) geschieht im Rahmen üblicher formgebender Verarbeitungsprozesse wie Extrusions-, Kalandrier-, Spritzgußverfahren und dergleichen. Dabei kann es gewünscht sein, eine vorkonfektionierte Mischung der Komponenten a) und b) einzusetzen. Mitverwendete weitere übliche Hilfsstoffe, die sich bei der Verarbeitung von Kunststoffen allgemein bewährt haben und die dem Fachmann bekannt sind, beispielsweise Slipmittel, Antistatika, Gleitmittel, Trennmittel, UV-Stabilisatoren, Antioxidantien, Füllstoffe, Brandschutzmittel, Entformungsmittel, Nukleirungsmittel und Antiblockmittel können entsprechend in getrennter Form vorkonfektioniert und bei der abschließenden Aufmischung der Fertigprodukte zugegeben werden. Auch die in der Praxis übliche Technik, die genannten Hilfsstoffe in einer Form einzusetzen, in der sie in Komponente a) bereits ganz oder teilweise enthalten sind, wird ausdrücklich in den Rahmen der vorliegenden Erfindung miteinbezogen.

Es kann aber - beispielsweise bei Anwendung der Extrudiertechnik - auch gewünscht sein, die Komponenten b) und/ oder andere Additive ganz oder teilweise direkt in die Polyolefinschmelze am Extruder einzudosieren, so daß die Mischung der Komponenten a) und b) - und gegebenenfalls weiterer Hilfsstoffe - nicht schon von vornherein als Vorkonfektionat vorhanden ist, sondern erst im Extruder selbst vorliegt. Eine derartige Technik bietet sich beispielsweise dann an, wenn die der Polymerschmelze zuzudosierenden Verbindungen b) in flüssiger Form vorliegen und ein Einspritzen dieser Komponente einfacher ist, als eine Vorkonfektionierung.

Es kann auch gewünscht sein - obgleich zur Erzielung des erfindungsgemäßen Effektes nicht erforderlich - im Anschluß an den erfindungsgemäßen Einsatz der Komponenten a) und b) - auf übliche Weise eine Corona- oder Plasmabehandlung vorzunehmen.

Als oleophiles Polyolefin-Basismaterial eigenen sich an sich alle heute bekannten Polymer- und Copolymertypen auf Ethylen- beziehungsweise Propylen-Basis.

Auch Abmischungen reiner Polyolefine mit Copolymeren sind grundsätzlich geeignet, solange die Migrationsfähigkeit der Verbindungen b) im Sinne der erfindungsgemäßen Erfindung erhalten bleibt und damit ihre Anreicherung im Bereich der Feststoffoberflächen sichergestellt ist. Für die erfindungsgemäße Lehre besonders geeignete Polymertypen sind in der nachfolgenden Zusammenstellung aufgezählt:

Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vemetztes Polyethylen), HPPE (high pressure polyethylene); isotaktisches Polypropylen; syndiotaktisches Polypropylen; Metallocen-katalysiert hergestelltes Polypropylen, schlagzäh-modifiziertes Polypropylen, Random-Copolymere auf Basis Ethylen und Propylen, Blockcopolymere auf Basis Ethylen und Propylen; EPM (Poly[ethylen-co-propylen]); EPDM (Poly[ethylen-co-propylen-co-nichtkonjugiertes Dien]).

Weitere geeignete Polymertypen sind: Poly(styrol); Poly(methylstyrol); Poly(oxymethylen); Metallocen-katalysierte alpha-Olefin- oder Cycloolefin-Copolymere wie Norbornen-Ethylen-Copolymere; Copolymere, die zu mindestens 80 % Ethylen und/oder Styrol enthalten und zu weniger als 20 % Monomere wie Vinylacetat, Acrylsäureester, Methacrylsäureester, Acrylsäure, Acrylnitril, Vinylchlorid. Beispiele solcher Polymeren sind: Poly(ethylen-co-ethylacrylat), Poly(ethylen-co-vinylacetat), Poly(ethylen-co-vinylchlorid), Poly(styrol-co-acrylnitril). Geeignet sind weiterhin

Pfropfcopolymere sowie Polymerblends, das heißt, Mischungen von Polymeren, in denen unter anderem die vorgenannten Polymere enthalten sind, beispielsweise Polymerblends auf Basis von Polyethylen und Polypropylen.

Im Rahmen der vorliegenden Erfindung sind Homo- und Copolymere auf Basis von Ethylen und Propylen besonders bevorzugt. In einer Ausführungsform der vorliegenden Erfindung setzt man dementsprechen als Polyolefin ausschließlich Polyethylen ein, in einer anderen Ausführungsform ausschließlich Polypropylen, in einer weiteren Ausführungsform Copolymere auf Basis von Ethylen und Propylen.

Das Aufbringen von Beschichtungen oder Verklebungen der nach dem erfindungsgemäßen Verfahren erhaltenen Oberflächen-modifizierten Polyolefin-basierten Formkörper und Folien kann an sich nach allen dem Fachmann bekannten einschlägigen Methoden erfolgen.

Wie bereits gesagt unterwirft man die Mischung der Komponenten a) und b) einer formgebenden Verarbeitung bei erhöhter Temperatur. Dabei ist es bevorzugt, die erhöhte Temperatur im Bereich von 180 bis 330 °C zu wählen.

In einer Ausführungsform setzt man als Komponente a) Polyethylen ein. Sofern es sich dabei um HDPE (high density polyethylene) handelt, stellt man bei der formgebenden Verarbeitung vorzugsweise eine Temperatur im Bereich von 200 bis 300 °C, bei Ruß enthaltendem HDPE insbesondere 250 bis 300 °C ein, sofern es sich um LDPE (low density polyethylene) handelt, stellt man bei der formgebenden Verarbeitung vorzugsweise eine Temperatur im Bereich von 180 bis 260 °C und insbesondere 200 bis 260 °C ein.

Bei Extrusionsverfahren gelten die gerade für die HDPE- und LDPE-Verarbeitung gemachten Temperaturangaben insbesondere für die Temperatur der Austrittsdüse.

Sofern die formgebende Verarbeitung der Mischung der Komponenten a) und b) durch Extrusion geschieht, kühlt man den Polyolefinformkörper unmittelbar nach dem Verlassen der Austrittsdüse vorzugsweise innerhalb eines Zeitraums von 0,1 bis 5,0 Sekunden um maximal 50 °C ab. Hinsichtlich dieser Temperaturdifferenz von 50 °C - nachfolgend auch ΔT50 genannt - gilt also die Gleichung

$$\Delta T50 = T_{Austrittsdüse} - T_{Polyolefinoberfläche}$$

In dieser Gleichung ist unter $T_{Austrittsdüse}$ die Temperatur der Austrittsdüse des Extruders zu verstehen, unter $T_{Polyolefinoberfläche}$ die Oberflächentemperatur des extrudierten Polyolefinformkörpers zu verstehen, die berührungslos, beispielsweise unter Einsatz einschlägig bekannter Infrarot-Techniken, gemessen wird (etwa mit einem Infrarot-Thermometer "IR-TA/Handy 1000" der Firma Chino).

Besonders bevorzugt ist es, den Polyolefinformkörper unmittelbar nach dem Verlassen der Austrittsdüse des Extruders innerhalb eines Zeitraums von 1,0 bis 5,0 Sekunden und insbesondere von 1,7 bis 5,0 Sekunden um maximal 50 °C abzukühlen.

Unter der Voraussetzung, daß der Polyolefinformkörper sich ab dem Verlassen der Austrittsdüse des Extruders mit konstanter Geschwindigkeit bewegt, kann die genannte Zeitskala in einfacher Weise in eine Entfernungsskala transformiert werden. Hierzu wird die bekannte Gleichung v = s / t (Geschwindigkeit = Wegstrecke geteilt durch Zeit) herangezogen, aus der sich durch Umformung s = v * t (Wegstrecke = Geschwindigkeit mal Zeit) ergibt, aus der man ersieht, daß Wegstrecke s (d.h. Entfernung von der Austrittsdüse) und Zeit t einander proportional sind. Der Nullpunkt der Entfernungsskala liegt definitionsgemäß unmittelbar an der Austrittsstelle der Düse.

In einer Ausführungsform nimmt man die formgebende Verarbeitung der Mischung enthaltend die Komponenten a) und b) durch ein Spritzgußverfahren vor. Dabei ist es bevorzugt, den dabei erhaltenen Polyolefinformkörper einer thermischen Nachbehandlung bei erhöhter Temperatur zu unterziehen. Dabei ist es insbesondere bevorzugt, die thermische Nachbehandlung derart durchzuführen, daß man eine Oberflächentemperatur des Polyolefinformkörpers von mindestens 200 °C und insbesondere von etw 240 °C einstellt. Zur Durchführung der thermischen Nachbehandlung kann man sich beispielsweise eines IR-Strahlers bedienen. Vorzugsweise beträgt die Dauer der thermischen Nachbehandlung mindestens 4 Sekunden.

Die unter Einsatz der substituierten Polyethylenimine b) erhältlichen Polyolefinformkörper, insbesondere die durch Extrusion zugänglichen Granulate, können ihrerseits dazu verwendet werden, als sogenannte Masterbatches bei der Verarbeitung von Massenkunststoffen eingesetzt zu werden.

Ein weiterer Gegenstand der vorliegenden Erfindung ist ein Verfahren zur Herstellung von verklebten und/oder beschichteten Polyolefin-basierten Formkörpern, Fasern und Folien, wobei man eine Mischung enthaltend

a) überwiegend ein oder mehrere Polyolefine und

b) ein Additiv

bei erhöhten Temperaturen auf übliche Weise einer formgebenden Verarbeitung wie Extrusions-, Kalandrier-, Spritzguß-, Blasformverfahren und dergleichen unterwirft und die dabei erhaltenen Polyolefin-basierten Formkörper, Fasern

und Folien anschließend auf übliche Weise mit einem Klebstoff und/oder einer Beschichtungsmasse in Kontakt bringt, wobei man als Additiv 0,01 bis 20 Gew.-% - bezogen auf die Polyolefine - ein oder mehrere substituierte Polyethylenimine einsetzt, die dadurch erhältlich sind, daß man Polyethylenimine, bei denen es sich um verzweigte, sphärische polymere Amine, mit Verbindungen der allgemeinen Formel (I)

$$R^1CO_2R^2 \qquad (I)$$

worin der Rest $R^1$ einen gesättigten oder ungesättigten, geradkettigen oder verzweigten Alkylrest mit 5 bis 23 C-Atomen und der Rest $R^2$ Wasserstoff oder einen gesättigten oder ungesättigten, geradkettigen oder verzweigten Alkylrest mit 1 bis 24 C-Atomen bedeuten, umsetzt, wobei man die Umsetzung so durchführt, daß die Verbindungen (I) mit den eingesetzten Polyethyleniminen in einer molaren Menge $n_{(I)}$ abreagieren, die durch die Gleichung

$$n_{(I)} = f \text{ x } (m_{PEI} / 43)$$

gegeben ist, worin der Faktor f eine Zahl im Bereich von 0,25 bis 0,75 und $m_{PEI}$ die Masse des eingesetzten Polyethylenimins in Gramm bedeuten und die Operatoren "x" und "/" für Multiplikation und Division stehen.

**Beispiele**

**1. Eingesetzte Materialien**

**1.1. Polyolefine (a)**

**Lupo:** Low-Density-Polyethylen (Handelsprodukt "Lupolen 1800 H" Handelsprodukt der Firma Elenac)

**1.2. Additive (b)**

**PEI1-25-Amid**: Umsetzungsprodukt von PEI1 (siehe unter Nr. 1.3.) mit Methyllaurat. Die Herstellung geschah wie folgt: 364,4 g (1,7 mol) Methyllaurat und 292g PEI1 (enthaltend 6,8 mol Aziridin-Bausteine) wurden in einen 1000-ml-Kolben gegeben und unter Rühren unter Stickstoff auf eine Temperatur von etwa 185 °C erhitzt. Das bei der Umsetzung freigesetzte Methanol wurde abgezogen (Destillationsbrükke) und aufgefangen. Die Dauer der Umsetzung und der parallel damit einhergehenden Abdestillation von Methanol betrug etwa 5 Stunden. Danach wurde kein Methanol mehr freigesetzt. Nun ließ man auf 150 °C abkühlen und setzte die Destillation im Wasserstrahlvakuum für eine weitere Stunde fort.

**PEI1-50-Amid**: Umsetzungsprodukt von PEI1 (siehe unter Nr. 1.3.) mit Methyllaurat. Die Herstellung geschah wie oben für PEI1-25-Amid beschrieben, wobei jedoch 428,7 g (2,0 mol) Methyllaurat und 171,3 g PEI1 (enthaltend 4,0 mol Aziridin-Bausteine) eingesetzt wurden.

**PEI1-75-Amid**: Umsetzungsprodukt von PEI1 (siehe unter Nr. 1.3.) mit Methyllaurat. Die Herstellung geschah wie oben für PEI1-25-Amid beschrieben, wobei jedoch 471,6 g (2,2 mol) Methyllaurat und 128 g PEI1 (enthaltend 3,0 mol Aziridin-Bausteine) eingesetzt wurden.

**PEI2-25-Amid**: Umsetzungsprodukt von PEI2 (siehe unter Nr. 1.3.) mit Methyllaurat. Die Herstellung geschah wie folgt: 364,4 g (1,7 mol) Methyllaurat und 292g PEI2 (enthaltend 6,8 mol Aziridin-Bausteine) wurden in einen 1000-ml-Kolben gegeben und unter Rühren unter Stickstoff auf eine Temperatur von etwa 185 °C erhitzt. Das bei der Umsetzung freigesetzte Methanol wurde abgezogen (Destillationsbrükke) und aufgefangen. Die Dauer der Umsetzung und der parallel damit einhergehenden Abdestillation von Methanol betrug etwa 5 Stunden. Danach wurde kein Methanol mehr freigesetzt. Nun ließ man auf 150 °C abkühlen und setzte die Destillation im Wasserstrahlvakuum für eine weitere

Stunde fort.

**PEI2-50-Amid**: Umsetzungsprodukt von PEI2 (siehe unter Nr. 1.3.) mit Methyllaurat. Die Herstellung geschah wie oben für PEI2-25-Amid beschrieben, wobei jedoch 428,7 g (2,0 mol) Methyllaurat und 171,3 g PEI2 (enthaltend 4,0 mol Aziridin-Bausteine) eingesetzt wurden.

**PEI2-75-Amid:** Umsetzungsprodukt von PEI2 (siehe unter Nr. 1.3.) mit Methyllaurat. Die Herstellung geschah wie oben für PEI2-25-Amid beschrieben, wobei jedoch 471,6 g (2,2 mol) Methyllaurat und 128 g PEI2 (enthaltend 3,0 mol Aziridin-Bausteine) eingesetzt wurden.

**1.3. Weitere Substanzen**

**PEI1:** Lupasol PR 8515 (verzweigtes Polyethylenimin; Mw = 2.000; Handelsprodukt der Fa. BASF)

**PEI2:** Lupasol WF (verzweigtes Polyethylenimin; Mw = 25.000; ; Handelsprodukt der Fa. BASF)

**2. Herstellung von Oberflächen-modifiziertem Polyethylen gemäß dem Verfahren der Erfindung**

Zur Überprüfung der Klebstoff-Kompatibilitäts-Eigenschaften von Oberflächen-modifiziertem Polyethylen wurden zunächst Polyethylen-Bänder hergestellt. Dazu wurden jeweils

- 600 g Polyethylen-Granulat a) und

- Additiv b) (bzw. bei den Vergleichsversuchen auch anderer Prüfsubstanzen)

vermengt. Art und Menge der jeweils eingesetzten Komponente b) ist Tabelle 1 zu entnehmen. Diese Mischungen wurden durch einen Trichter in einen Extruder eingebracht. Eingesetzt wurde dabei ein Doppelschneckenextruder DSK 42/7 der Firma Brabender OHG (Duisburg). Ein Extruder ist - wie dem Fachmann hinlänglich bekannt - eine Kunststoff-Verarbeitungsmaschine, welche zum kontinuierlichen Mischen und Plastifizieren sowohl von pulver- als auch granulatförmigen Thermoplasten geeignet ist. Unter dem Einfülltrichter befindet sich neben einer Wasserkühlung, die ein verfrühtes Schmelzen des Granulates bzw. Pulvers verhindern soll, auch eine gegenläufige Doppelschnekke, die der Länge nach in drei Heizzonen aufgeteilt ist. Die Temperatur der Heizzonen und die Drehzahl der Doppelschnecke lassen sich über einen Datenverarbeitungs-Plast-Corder PL 2000 regeln, der über eine PC-Schnittstelle mit dem Extruder verbunden is. Für die Herstellung der Polyethylenbänder wurden die folgenden Temperaturen eingestellt: Heizzonen I-III jeweils 230°C, wobei die drei Heizzonen luftgekühlt waren, um die Temperaturen konstant zu halten.

Das Polyethylen-Granulat inclusive der jeweiligen Komponente b) wurde automatisch durch die gegeneinander laufende Doppelschnecke in den Extruder eingezogen und entlang der Schnecke befördert. Die Drehzahl betrug dabei 50 Umdrehungen pro Minute. Dadurch war eine relativ lange Verweilszeit im Extruder und dementsprechend eine gute Durchmischung und Homogenisierung gewährleistet. Diese homogene und praktisch bläschenfreie Mischung gelangte schließlich in eine Düse, die eine vierte Heizzone darstellt. Die Temperatur dieser Austrittsdüse ist Tabelle 1 zu entnehmen.

Nach dem Austritt aus der Düse (Maße der Düse = 50 x 0,5 mm) floß die heiße Mischung auf ein Transportband, dessen Geschwindigkeit so eingestellt wurde, daß beim Abkühlen an der Luft ein glattes und gleichmäßig dickes und breites Band entstand. Bei den hier beschriebenen Arbeiten wurde die Geschwindigkeit so eingestellt, daß das Polyethylenband etwa 45 mm breit und etwa 0,5 mm dick war. Aus diesem Material wurden quadratische Prüfkörper (25 x 20 mm) ausgestanzt und für die unten näher beschriebenen Klebeversuche eingesetzt.

**3. Klebe- und Zerreiß-Versuche**

**3.1. Herstellung der Prüflinge**

Die gemäß 2) hergestellten extrudierten Bänder wurden 24 Stunden bei Raumtemperatur (20 °C) gelagert. Anschließend wurden quadratische Polyethylenstücke von 25 x 20 mm zwischen zwei Holzbrettchen mit den Maßen 100 x 25 mm verklebt. Die Verklebung hatte dabei eine Dicke von 2 mm. Die Klebefläche betrug exakt 25 x 20 = 500 $mm^2$. Es sei darauf hingewiesen, daß die Versuchsanordnung analog zu derjenigen ist, die auf S. 21 der oben genannten WO 98/42776 skizziert wurde.

Als Klebstoff wurde ein Zweikomponentenklebstoff eingesetzt (Polyurethan-Kleber "Makroplast" der Firma Henkel KGaA/Düsseldorf). Dazu wurden in einer Aluminiumschale die beiden Reaktivkomponenten (Harz = UK 8109; Härter = UK 5400) im Verhältnis Harz : Härter von 5:1 angerührt. Die Topfzeit betrug etwa 1 Stunde.

Nach entsprechender Lagerung wurden von jedem Band Streifen mit einer Breite von 25 mm abgeschnitten und mit Hilfe einer Schablone zwischen zwei Holzbrettchen beidseitig verklebt. Es wurden dabei 5 Verklebungen von jedem Kunststoffband angefertigt. Die Verwendung einer Schablone garantierte dabei die Einhaltung der gewünschten Klebefläche zwischen dem modifiziertem Kunststoff und den Brettchen. Zur Fixierung des Prüflings wurden dabei Holzklammern verwendet. Überschüssiger Kleber wurde entfernt.

### 3.2. Zerreiß-Versuche

Die gemäß 3.1.) hergestellten Prüflinge wurden 5 Tage bei 20 °C gelagert, um sicherzustellen, daß der Zweikomponentenklebstoff völlig ausgehärtet war. Zur Messung der Zugscherkräfte wurde anschließend eine Universalprüfmaschine der Firma Zwick verwendet. Die Geschwindigkeit, mit der der Prüfling auf Zug beansprucht wurde, betrug 15 mm/min. Die verklebten Holzspatel (= Prüflinge) wurden in die Klemmbacken der Universalprüfmaschine eingespannt und mit der vorgegebenen Prüfgeschwindigkeit auseinandergezogen. Dabei wurde sichergestellt, daß die Prüflinge stets senkrecht und exakt in der Mitte des Prüfgerätes angeordnet waren. Die erzielten Versuchsergebnisse sind in den Tabelle 1 zusammengestellt. Sämtliche Ergebnisse sind Mittelwerte aus jeweils 5 Versuchen.

Tabelle 1:

| Nr. | a) | Additiv % | Verbindung | T/Düse °C | ZSG |
|---|---|---|---|---|---|
| V1 | Lupo | - | - | 250 | 0,20 |
| V2 | Lupo | 1,0 | PEI1 | 250 | 0,50 |
| V3 | Lupo | 3,0 | PEI1 | 250 | 0,49 |
| V4 | Lupo | 5,0 | PEI1 | 250 | 0,47 |
| V5 | Lupo | 1,0 | PEI2 | 250 | 1,41 |
| V6 | Lupo | 3,0 | PEI2 | 250 | 1.05 |
| B1 | Lupo | 1,0 | PEI1-25-Amid | 250 | 0,81 |
| B2 | Lupo | 3.0 | PEI1-25-Amid | 250 | 3,45 |
| B3 | Lupo | 5,0 | PEI1-25-Amid | 250 | 4,59 |
| B4 | Lupo | 1,0 | PEI1-50-Amid | 250 | 4,27 |
| B5 | Lupo | 3.0 | PEI1-50-Amid | 250 | 5,36 |
| B6 | Lupo | 5.0 | PEI1-50-Amid | 250 | 3,39 |
| B7 | Lupo | 1,0 | PEI1-75-Amid | 250 | 4.29 |
| B8 | Lupo | 3.0 | PEI1-75-Amid | 250 | 5,56 |
| B9 | Lupo | 5,0 | PEI1-75-Amid | 250 | 3,56 |
| B10 | Lupo | 1,0 | PEI2-25-Amid | 250 | 1,16 |
| B11 | Lupo | 3.0 | PEI2-25-Amid | 250 | 3,40 |
| B12 | Lupo | 5,0 | PEI2-25-Amid | 250 | 3,55 |
| B13 | Lupo | 1,0 | PEI2-50-Amid | 250 | 1,89 |
| B14 | Lupo | 3.0 | PEI2-50-Amid | 250 | 4,29 |
| B15 | Lupo | 5,0 | PEI2-50-Amid | 250 | 3,04 |
| B16 | Lupo | 1,0 | PEI2-75-Amid | 250 | 2,08 |
| B17 | Lupo | 3.0 | PEI2-75-Amid | 250 | 4,55 |
| B18 | Lupo | 5,0 | PEI2-75-Amid | 250 | 3,30 |

Tabelle 1: (fortgesetzt)

| Nr. | a) | Additiv % | Verbindung | T/Düse °C | ZSG |
|---|---|---|---|---|---|

Zu den Spalten der Tabelle 1:

| | |
|---|---|
| Nr. | Versuchs-Nummer (B= erfindungsgemäß; V=Vergleich) |
| a) | Komponente a) (Polyolefin) |
| Additiv | hier wurde entweder eine Vergleichsverbindung oder eine erfindungsgemäße Verbindung b) eingesetzt; in der Spalte "%" ist angegeben, in welcher Menge die jeweilige Verbindung - Gew.-% bezogen auf die Komponente a) - eingesetzt wurde |
| T/Düse | Temperatur der Austrittsdüse des Extruders in °C |
| ZSG | Wert der Zugscherfestigkeit, ermittelt bei den Zerreiß-Versuchen. Die Angaben sind in Newton pro Quadratmillimeter. |

Aus Tabelle 1 geht hervor, daß beim Einsatz der erfindungsgemäßen Verbindungen b) (siehe die Beispiele B1 bis B18) deutlich bessere Resultate erzielt wurden, als in Abwesenheit von Additiven (siehe Vergleichsbeispiel V1) bzw. in Anwesenheit von nichtmodifizierten Polyethyleniminen (siehe Vergleichsbeispiele V2 bis V5).

## Patentansprüche

1. Verwendung von substituierten Polyethyleniminen zur dauerhaften Verbesserung der Klebstoff- und/oder Beschichtungs-Kompatibilität von Polyolefin-basierten Formkörpern, Fasern und Folien, wobei man eine Mischung enthaltend

   a) überwiegend ein oder mehrere Polyolefine und

   b) 0,01 bis 20 Gew.-% - bezogen auf die Polyolefine - ein oder mehrere substituierte Polyethylenimine, die dadurch erhältlich sind, daß man Polyethylenimine, bei denen es sich um verzweigte, sphärische polymere Amine handelt, mit Verbindungen der allgemeinen Formel (I)

$$R^1CO_2R^2 \quad (I)$$

   worin der Rest $R^1$ einen gesättigten oder ungesättigten, geradkettigen oder verzweigten Alkylrest mit 5 bis 23 C-Atomen und der Rest $R^2$ Wasserstoff oder einen gesättigten oder ungesättigten, geradkettigen oder verzweigten Alkylrest mit 1 bis 24 C-Atomen bedeuten, umsetzt, wobei man die Umsetzung so durchführt, daß die Verbindungen (I) mit den eingesetzten Polyethyleniminen in einer molaren Menge $n_{(I)}$ abreagieren, die durch die Gleichung

$$n_{(I)} = f \times (m_{PEI} / 43)$$

   gegeben ist, worin der Faktor f eine Zahl im Bereich von 0,25 bis 0,75 und $m_{PEI}$ die Masse des eingesetzten Polyethylenimins in Gramm bedeuten und die Operatoren "x" und "/" für Multiplikation und Division stehen,
   bei erhöhten Temperaturen auf übliche Weise einer formgebenden Verarbeitung wie Extrusions-, Kalandrier-, Spritzguß-, oder Blasformverfahren unterwirft.

2. Verwendung nach Anspruch 1, wobei man als Komponente a) Polyethylen einsetzt.

3. Verwendung nach Anspruch 1 oder 2, wobei man solche Verbindungen (I) einsetzt, bei denen der Rest $R^1$ einen gesättigten oder ungesättigten, geradkettigen oder verzweigten Alkylrest mit 9 bis 17 C-Atomen bedeuten.

4. Verwendung nach einem der Ansprüche 1 bis 3, wobei man solche Verbindungen (I) einsetzt, bei denen der Rest

$R^2$ Wasserstoff oder eine Methylgruppe bedeuten.

**5.** Verwendung nach einem der Ansprüche 1 bis 4, wobei man die formgebende Verarbeitung der Mischung enthaltend die Komponenten a) und b) in einem Extruder vornimmt, wobei man den Polyolefinformkörper unmittelbar nach dem Austritt aus der Austrittsdüse innerhalb eines Zeitraums von 0,1 bis 5,0 Sekunden maximal um 50 °C abkühlt.

**6.** Verwendung nach einem der Ansprüche 1 bis 5, wobei man bei der formgebenden Verarbeitung der Polyolefine übliche weitere Hilfsstoffe zusetzt.

**7.** Verwendung nach einem der Ansprüche 1 bis 6, wobei man als zusätzlichen weiteren Verarbeitungsschritt auf übliche Weise eine Corona- oder Plasmabehandlung vornimmt.

**8.** Verfahren zur Herstellung von verklebten und/oder beschichteten Polyolefin-basierten Formkörpern, Fasern und Folien, wobei man eine Mischung enthaltend

b) überwiegend ein oder mehrere Polyolefine und

b) ein Additiv

bei erhöhten Temperaturen auf übliche Weise einer formgebenden Verarbeitung wie Extrusions-, Kalandrier-, Spritzguß-, Blasformverfahren und dergleichen unterwirft und die dabei erhaltenen Polyolefin-basierten Formkörper, Fasern und Folien anschließend auf übliche Weise mit einem Klebstoff und/oder einer Beschichtungsmasse in Kontakt bringt,
**dadurch gekennzeichnet, daß** man
als Additiv 0,01 bis 20 Gew.-% - bezogen auf die Polyolefine - ein oder mehrere substituierte Polyethylenimine einsetzt, die dadurch erhältlich sind, daß man Polyethylenimine, bei denen es sich um verzweigte, sphärische polymere Amine, mit Verbindungen der allgemeinen Formel (I)

$$R^1CO_2R^2 \qquad \text{(I)}$$

worin der Rest $R^1$ einen gesättigten oder ungesättigten, geradkettigen oder verzweigten Alkylrest mit 5 bis 23 C-Atomen und der Rest $R^2$ Wasserstoff oder einen gesättigten oder ungesättigten, geradkettigen oder verzweigten Alkylrest mit 1 bis 24 C-Atomen bedeuten, umsetzt, wobei man die Umsetzung so durchführt, daß die Verbindungen (I) mit den eingesetzten Polyethyleniminen in einer molaren Menge $n_{(I)}$ abreagieren, die durch die Gleichung

$$n_{(I)} = f \times (m_{PEI} / 43)$$

gegeben ist, worin der Faktor f eine Zahl im Bereich von 0,25 bis 0,75 und $m_{PEI}$ die Masse des eingesetzten Polyethylenimins in Gramm bedeuten und die Operatoren "x" und "/" für Multiplikation und Division stehen.

## Claims

**1.** The use of substituted polyethyleneimines for permanently improving the adhesive and/or coating compatibility of polyolefin-based moldings, fibers and films, **characterized in that** a mixture containing

a) predominantly one or more polyolefins and
b) 0.01 to 20% by weight - based on the polyolefins - of one or more substituted polyethyleneimines obtainable by reacting polyethyleneimines, i.e. branched, spherical polymeric amines, with compounds corresponding to general formula (I):

$$R^1CO_2R^2 \qquad \text{(I)}$$

in which $R^1$ is a saturated or unsaturated, linear or branched alkyl group containing 5 to 23 carbon atoms and $R^2$ is hydrogen or a saturated or unsaturated, linear or branched alkyl group containing 1 to 24 carbon atoms, the reaction being carried out in such a way that the compounds (I) react off with the polyethyleneimines used in a molar quantity $n_{(I)}$ determined by the equation $n_{(I)} = fx(m_{PEI}/43)$ where the factor f is a number of 0.25 to 0.75 and $m_{PEI}$ is the weight of the polyethyleneimine used in grams and the operators "x" and "/" stand for multiplication and division,
is subjected in the usual way to molding by extrusion, calendering, injection molding and the like at elevated temperatures.

2. The use claimed in claim 1, **characterized in that** polyethylene is used as component a).

3. The use claimed in claim 1 or 2, **characterized in that** compounds (I) in which $R^1$ is a saturated or unsaturated, linear or branched alkyl group containing 9 to 17 carbon atoms are used.

4. The use claimed in any of claims 1 to 3, **characterized in that** compounds (I) in which $R^2$ is hydrogen or a methyl group are used.

5. The use claimed in any of claims 1 to 4, **characterized in that** the mixture containing components a) and b) is molded in an extruder, the polyolefin molding being cooled by at most 50°C in 0.1 to 5.0 seconds immediately after leaving the extrusion die.

6. The use claimed in any of claims 1 to 5, **characterized in that** typical further additives are added during the molding of the polyolefins.

7. The use claimed in any of claims 1 to 6, **characterized in that** a corona or plasma treatment is carried out in the usual way as an additional processing step.

8. A process for the production of bonded and/or coated polyolefin-based moldings, fibers and films, in which a mixture containing

a) predominantly one or more polyolefins and
b) an additive

is subjected in known manner to molding by extrusion, calendering, injection molding, blow molding and the like at elevated temperatures and the resulting polyolefin-based moldings, fibers and films are subsequently contacted in the usual way with an adhesive and/or a coating composition, **characterized in that** the additive is 0.01 to 20% by weight - based on the polyolefins - of one or more substituted polyethyleneimines obtainable by reacting polyethyleneimines, i.e. branched, spherical polymeric amines, with compounds corresponding to general formula (I):

$$R^1CO_2R^2 \quad (I)$$

in which $R^1$ is a saturated or unsaturated, linear or branched alkyl group containing 5 to 23 carbon atoms and $R^2$ is hydrogen or a saturated or unsaturated, linear or branched alkyl group containing 1 to 24 carbon atoms, the reaction being carried out in such a way that the compounds (I) react off with the polyethyleneimines used in a molar quantity $n_{(I)}$ determined by the equation $n_{(I)} = fx(m_{PEI}/43)$ where the factor f is a number of 0.25 to 0.75 and $m_{PEI}$ is the weight of the polyethyleneimine used in grams and the operators "x" and "/" stand for multiplication and division.

**Revendications**

1. Utilisation de polyéthylènimines substituées pour l'amélioration durable de la compatibilité avec les colles et/ou revêtements d'objets moulés, fibres et films à base de polyoléfines, selon laquelle un mélange contenant :

a) principalement une ou plusieurs polyoléfines et
b) 0,01 à 20 % en poids, par rapport aux polyoléfines, d'une ou plusieurs polyéthylènimines substituées, que

l'on peut obtenir en faisant réagir des polyéthylènimines qui sont des amines polymères sphériques, ramifiées, avec des composés répondant à la formule générale (I)

$$R^1CO_2R^2 \quad (I)$$

dans laquelle le reste $R^1$ représente un reste alkyle à chaîne droite ou ramifiée, saturé ou insaturé, comportant 5 à 23 atomes de carbone et le reste $R^2$ représente un atome d'hydrogène ou un reste alkyle à chaîne droite ou ramifiée, saturé ou insaturé, comportant 1 à 24 atomes de carbone, en effectuant la réaction de telle sorte que les composés (I) réagissent avec les polyéthylènimines utilisées en une quantité molaire $n_{(I)}$ indiquée par l'équation

$$n_{(I)} = fx\ (m_{PEI} / 43)$$

dans laquelle le facteur f représente un nombre se situant dans une plage de 0,25 à 0,75 et $m_{PEI}$ représente la masse de la polyéthylènimine utilisée en grammes, les opérateurs "x" et "/" signifiant multiplication et division, est soumis à des températures élevées, de la manière courante, à une transformation par un procédé comme l'extrusion, le calandrage, le moulage par injection, ou le moulage par soufflage.

**2.** Utilisation selon la revendication 1, dans laquelle on emploie, comme composant a), du polyéthylène.

**3.** Utilisation selon la revendication 1 ou 2, dans laquelle on emploie des composés (1) dans lesquels le reste $R^1$ représente un reste alkyle à chaîne droite ou ramifiée, saturé ou non saturé, comportant 9 à 17 atomes de carbone.

**4.** Utilisation selon l'une quelconque des revendications 1 à 3, dans laquelle on emploie des composés (1) dont le reste $R^2$ représente un atome d'hydrogène ou un groupe méthyle.

**5.** Utilisation selon l'une quelconque des revendications 1 à 4, dans laquelle la transformation du mélange contenant les composants a) et b) est effectuée dans une extrudeuse, l'objet moulé en polyoléfine étant refroidi immédiatement après sa sortie de l'extrudeuse, au cours d'un laps de temps de 0,1 à 5,0 secondes à un maximum de 50 °C.

**6.** Utilisation selon l'une quelconque des revendications 1 à 5, dans laquelle d'autres adjuvants courants sont ajoutés au cours de la transformation des polyoléfines.

**7.** Utilisation selon l'une quelconque des revendications 1 à 6, dans laquelle un traitement couronne ou par plasma est effectué de la manière habituelle comme étape de traitement supplémentaire.

**8.** Procédé de fabrication d'objets moulés, fibres et films à base de polyoléfines, collés et/ou revêtus, dans lequel on soumet un mélange contenant

a) principalement une ou plusieurs polyoléfines et
b) un additif,

à des températures élevées de la manière habituelle, à une transformation par un procédé comme l'extrusion, le calandrage, le moulage par injection, le moulage par soufflage et autres, et on met ensuite les objets moulés, fibres et films à base de polyoléfines ainsi obtenus de la manière habituelle en contact avec une colle et/ou une masse de revêtement,
**caractérisé en ce que**
comme additif, on utilise 0,01 à 20 % en poids - par rapport aux polyoléfines - d'une ou plusieurs polyéthylènimines substituées, que l'on peut obtenir en faisant réagir des polyéthylènimines, qui sont des amines polymères sphériques, ramifiées, avec des composés répondant à la formule générale (I)

$$R^1CO_2R^2 \quad (I)$$

dans laquelle le reste $R^1$ représente un reste alkyle à chaîne droite ou ramifiée, saturé ou insaturé, comportant 5 à 23 atomes de carbone et le reste $R^2$ représente un atome d'hydrogène ou un reste alkyle à chaîne droite ou

ramifiée, saturé ou insaturé, comportant 1 à 24 atomes de carbone, en effectuant la réaction de telle sorte que les composés (I) réagissent avec les polyéthylènimines utilisées en une quantité molaire $n_{(I)}$ indiquée par l'équation

$$n_{(I)} = f x (m_{PEI} / 43)$$

le facteur f représentant un nombre se situant dans une plage de 0,25 à 0,75 et $m_{PEI}$ représentant la masse en grammes de la polyéthylènimine utilisée, et les opérateurs "x" et "/" signifiant multiplication et division.